# EUROPEAN PATENT APPLICATION

(11) **EP 1 434 450 A1**
(43) Date of publication of application: **30.06.2004**
(21) Application number: 03380271.1
(22) Date of filing: 24.11.2003
(51) Int. Cl.: H04Q 7/32, H04M 1/725, H04M 1/247

(54) **Telephone, system and method for interaction between a telephone and a remote entity.**

(30) Priority: 23.12.2002 ES 200202982
(71) Applicant: Vodafone Group PLC, Newbury Berkshire RG14 2FN (GB)
(72) Inventor: Contreras Alvarez, Francisco, 28038 Madrid (ES)
(74) Representative: Davila Baz, Angel

(57) **Abstract**

The invention refers to a telephone, a system and a method for interaction between the telephone and a remote entity. The method includes the steps of
setting up a telephone call to the remote entity (B), from the telephone (A);
sending an activator message of one application for interaction with the remote entity from the remote entity to the telephone once the telephone call is received in the remote entity;
activating said application for interaction as a response to said activator message, and displaying on the display at least one menu for interaction;
exchanging information between the telephone and remote entity using the menu for interaction.

## Description

### FIELD OF THE INVENTION

The invention is comprised within the field of mobile telephony. As is known, English acronyms and terms are normally used in this field for referring to elements and concepts pertaining to the field. To facilitate reading this document for a reader who is not a person skilled in the art, a listing of acronyms used in the text is given below:
- DTMF: Dual Tone Multiple Frequency (format for data transmission by telephone and radio; the data are a limited set of digits represented by the combination of two different frequency tones from among a set of possible multiple frequencies)
- GSM: Global System for Mobile Communication
- ICC: Integrated Circuit Card (Chip Card)
- SIM: Subscriber Identity Module
- SAT: SIM Application Toolkit
- UMTS: Universal Mobile Telecommunications System (also called "Third Generation Mobile Telephony)
- UICC: UMTS Integrated Circuit Card
- USIM: Universal Subscriber Identity Module
- USAT: USIM Application Toolkit (SAT in the case of UMTS)
- OTA: Over The Air (Remote access to the SIM/USIM card and/or to the terminal)
- SM: Short Message
- SMS: Short Message Service
- SS: Supplementary Services (supplementary call services; permits sending and receiving chains of characters in GSM networks for requesting certain standardized call services)
- TAR: Toolkit Application Reference (Univocal identifier of the toolkit application loaded on the ICC/UICC card)
- USSD: Unstructured Supplementary Service Data (permits sending and receiving chains of characters in GSM networks for providing new non-standardized services)
- WAP: Wireless Application Protocol (protocol architecture which permits subscribers to instantaneously access information stored in servers from his/her mobile telephone or device)

### BACKGROUND OF THE INVENTION

### GENERAL TECHNICAL CONCEPTS

There are different types of mobile telephones (also called "portable" or "cellular telephones"), which are usually provided with a keyboard and a display with the capacity to show alphanumerical symbols and, in many cases, graphics as well.

On the other hand, there are different mobile telephony systems, among them the GSM and UMTS (also called Third Generation Mobile Telephony) system.

In both the GSM system as well as in the UMTS system, the subscriber equipment comprises:
a) on one hand, a terminal (which is many times called "mobile telephone") and which includes a casing, display, keyboard, power source and different circuits; and
b) on the other hand, an ICC or UICC (UMTS Integrated Circuit Card) card. In the case of GSM, it is an ICC card called SIM card or simply SIM (Subscriber Identity Module) or a UICC card with a SIM application. In the case of UMTS, it is a UICC with a USIM application. Both the SIM card and the UICC card (with one or several SIM and/or USIM applications) contain a set of files with data of the mobile telephony network operator and of the subscriber, and are provided with means for carrying out operations associated with a series of commands which permit the terminal to access those files (to read them, write them, select them, verify subscriber keys, etc.). Those data authenticating the subscriber to the network are contained among the subscriber data.

Until the arrival of UMTS, no distinction was normally made between the physical interface of the application (dependent on the nature of the ICC smart card) and the application itself: both were called SIM. Third Generation Mobile Telephony (UMTS) introduced the separation of the physical interface and the applications. The physical interface received the name of UICC; it is a platform on which several applications can simultaneously coexist; there can be SIM and/or USIM applications among them. In UMTS, the subscriber identification application itself is called USIM.

A smart card is considered a physically secure device, that is, it is a device in which the stored data are protected against attacks by third parties trying to read them, modify them, delete them or falsify them without permission of the owner of the information.

Below, the Subscriber Identity Module will be referred to as SIM for both GSM as well as UMTS (that is, with SIM we also refer to a UICC with the corresponding SIM or USIM applications).

In the field of mobile telephony, the concept of SAT=SIM Application Toolkit (in UMTS, USAT=USIM Application Toolkit) is also known, which consists of a protocol in which a set of commands is defined which permit the card to interact with the mobile terminal from SIM applications; below, an application based on said protocol is referred to as a "Toolkit application".

At first, mobile terminals were only capable of sending commands to the SIMs, whereas the SIMs were only capable of responding to commands received from the mobile terminal.

An evolution subsequently occurred with mobile terminals and SIM cards, and on one hand it permits the terminals to send commands to the SIM card as well as to receive commands therefrom, and on the other hand, it permits the SIM card to respond to commands received from the mobile terminal as well as to send commands thereto. These commands permit the SIM, for example, to request the terminal to send a short message (SM), to make a call, to show a list of options to the subscriber, to request data from him/her, etc. The applications existing in the SIM card capable of sending commands to the mobile terminal are known as SAT (SIM Application Toolkit) applications. In UMTS, they are known as USAT (USIM Application Toolkit) applications. Generally, both are called Toolkit Applications.

Toolkit Applications are an optional feature of SIM cards and UICC cards (with the corresponding applications). High level procedures, command content and encoding, are specified in the GSM11.14 standard for GSM and in the 3GPP TS 31.111 standard for UMTS.

The OTA (Over The Air) concept is also known, which refers to remote access to the SIM (or USIM) card. Initially, when the cards became available on the market, the operator could not modify anything on them, they were out of reach. However, it was of interest to be able to modify the content of some files on the card, to modify the customization profile and to load or modify Toolkit Applications once the card was in possession of the client. Said Toolkit Applications are univocally identified by means of a specific identifier (TAR).

Therefore, the manufacturers of cards began to incorporate OTA (remote access) systems which permitted managing the contents of the card by means of special short messages (known as OTA messages). Each manufacturer had a proprietary solution incompatible with those of other manufacturers. Standard specifications were subsequently generated for carrying out this type of remote OTA modifications (GSM 03.48 and 3GPP 23.048). Based on these specifications, compatible OTA systems can be implemented which permit file and application management.

Any OTA message generated by a server and sent to a terminal carries an indication that it is of the *Datadownload* type. When the terminal receives the message, it sends it to the card by means of an *ENVELOPE* command. The card is responsible for decrypting it (if it is encrypted) and for carrying out the suitable verifications, verifying the checksum, the sequence number, etc. The TAR is subsequently analyzed and is sent to the corresponding application which is responsible for the processing thereof.

Work is currently being done in the definition of standards which permit using other types of carriers, not just Short Messages, for carrying out faster and more flexible communications, these carriers can be GPRS (General Packet Radio Service), Bluetooth, data call, etc.

### BACKGROUND

There are currently many systems which permit interaction between a mobile telephone and a remote entity, frequently by means of a command and data exchange between a server of the remote entity and the mobile telephone. For example, Internet access from a mobile telephone is known by means of the WAP protocol ("Wireless Application Protocol" - a protocol architecture which permits the subscribers to instantaneously access information stored in servers from his/her mobile telephone or device). Other systems of interaction between a mobile telephone and remote entities are based on a data and command exchange initiated by means of sending a Short Message (SM) from the mobile terminal to the remote entity. The remote entity responds to said Short Message by means of sending data, instructions or files which are sent with Short Messages or with other carriers, for example, GPRS. For example, Internet access from a mobile telephone is known by means of the WIB/WIG protocol ("Wireless Internet Browser/Wireless Internet Gateway" - a protocol architecture which permits subscribers to instantaneously access information stored in servers from the ICC/UICC card of his/her mobile telephone or device regardless of whether it is WAP or not).

Interaction between a subscriber and a remote entity is also common through a voice channel arranged between a telephone (which can be mobile or fixed) and the remote entity. Besides the traditional system in which the subscriber orally communicates with a human operator representing the remote entity, there are also systems in which the subscriber communicates with a machine; the machine can be provided with a voice recognition system (in which case the subscriber must pronounce the commands and data he/she wishes to provide to the remote entity) or with a system for communication by Dual Tone Multiple Frequency dialing (in which case the subscriber sends data and/or commands to the machine by means of the generation of Dual Tone Multiple Frequency, dialing the corresponding telephone keys). Normally, the machine has a recording or voice message synthesization means which request data and/or instructions from the subscriber, who answers by speaking or dialing the telephone keys, according to the system used. In both cases, in order to initiate the interaction session with the remote entity, the subscriber simply dials a telephone number and sets up a voice channel between his/her telephone and the machine.

Today, in a large number of business sectors, there are many automatic services designed for facilitating to subscribers, by means of Dual Tone Multiple Frequency (DTMF) dialing and/or by voice recognition (after making a call to a certain telephone number), access to a wide range of customized services (telephone banking, ticket purchase, medical assistance, generic customer services, home system services, etc.). For many subscribers, accessing this type of services by means of a simple call to a telephone number is more comfortable and/or intuitive than trying to initiate a session with the remote center by means of sending a Short Message.

The custom has been to access this type of services mainly from "fixed terminals" which support Dual Tone Multiple Frequency dialing. The subscriber calls a certain telephone number, communication is set up through a normal voice channel, and the subscriber begins to follow instructions given from a remote server by pushing the indicated buttons and/or by vocalizing the options indicated by the server. It is also possible to access this type of services from a "mobile terminal" by conventionally making a telephone call and giving instructions and/or sending data by means of Dual Tone Multiple Frequency dialing and/or with voice (if the system functions by the voice recognition mode).

This system of communication with a machine of a remote entity for accessing services, etc., has a fundamental advantage: it is comfortable for the subscriber to set up communication by means of a simple telephone call to a "normal" telephone number without having to send Short Messages or to set up Internet connection through the WAP protocol. This advantage is perhaps especially important for people accustomed to accessing services through conventional fixed telephones.

This system also has a series of drawbacks, some of which are the following:
i) (From a fixed telephone as well as from a mobile telephone): many times, the subscriber is obliged to provide a series of "standard" data which have to be repeated every time the subscriber tries to access a specific service or a certain remote entity: for example, personal identification number (for example, National Identification Number), a secret access key, data identifying the desired service (for example, when the remote entity offers a large number of services from among which the subscriber has to choose one, which at times is done by repeatedly choosing from among several options offered by a synthesized voice), etc. This forces the subscriber to wait for instructions from the machine and then to dial the keys or to pronounce the suitable words, repeating these operations each time he/she has to access the service.
ii) (From a fixed telephone as well as from a mobile telephone): the man-machine interaction based on dialing keys or on voice recognition can be tedious for the subscriber, who has to listen to instructions and then act by dialing keys or pronouncing words at a rhythm that is somewhat conditioned by the machine (which gives instructions with a synthesized voice and/or with pre-recorded messages), by the subscriber's ability with regard to managing the keys and by the need to speak slowly so that the instructions or data are recognized by the machine.
iii) (From a mobile telephone): in the case of the mobile telephone, the communication option with Dual Tone Multiple Frequency dialing can be rather unattractive for the subscriber since, if he/she does not have a "speaker phone" kit, it can be complicated to dial the suitable keys while at the same time listening to the instructions received.

### DESCRIPTION OF THE INVENTION

As a result, and after an exhaustive analysis of the technical systems existing for the automated remote interaction between a subscriber and a machine of a remote entity providing a service to the subscriber, a system has been developed which permits the subscriber to set up contact with the machine by means of a conventional call, from a mobile telephone, then proceeding to an interaction mode which is more comfortable than the aforementioned system (which was based on an exchange of data exclusively using the voice channel set up with the call from the subscriber to the remote entity, receiving voice messages from the machine and returning voice messages or specific digits transmitted with Dual Tone Multiple Frequency dialing). Furthermore, in said interaction mode, the mobile terminal could receive specific orders from the remote entity for carrying out auxiliary actions such as sending an SM, SS, USSD, as well as, for example, setting up a WAP session.

A first aspect of the invention corresponds to a telephone, which comprises:
- a terminal comprising at least one display and means for introducing data and instructions (for example, a keyboard);
- means for making a telephone call to a remote entity;
- means for sending information, comprising data and/or commands, to the remote entity from the telephone;
- means for receiving from said remote entity and as a response to said telephone call, at least one activator message of, at least, one application for interaction with the remote entity;
- means for activating, as a response to said activator message, said application for interaction, said application for interaction comprising means for displaying on the display at least one menu for interaction with the remote entity.

"Remote entity" is understood as an entity in a broad sense; it does not have to be a single machine or server, but rather the remote entity can comprise a plurality of machines or servers, which can even correspond to different legal entities. Normally, the voice channel is set up with a certain machine or server, but the subsequent interaction between the mobile telephone and the remote entity can involve other machines or servers with which the telephone can communicate, for example, by means of Short Messages (SM), SS, USSD or WAP. In this manner, by means of sending a certain message to the application for interaction, a first server of the remote entity (for example, the one receiving the telephone call and with which a first voice channel corresponding to said telephone call is set up) can make a menu appear on the display offering the subscriber the possibility to send a Short Message to a second server of the remote entity, which can even be part of a legal entity other than that of the first server.

The telephone can be a mobile telephone comprising a card (ICC/UICC) in which the application for interaction is housed, or the application for interaction can be housed in the terminal of the telephone.

The telephone can comprise:
- a module for communication with a remote entity, said module comprising: means for receiving messages from the remote entity; and means for sending messages to the remote entity;
- a module for interpretation of messages received from the remote entity;
- a subscriber interface module; and
- a module for composition of interaction messages, which comprises:
   - means for displaying menus for interaction on the telephone display through the subscriber interface module and according to the interpretation results received from the module for interpretation of messages received from the remote entity;
   - means for composing messages for the remote entity according to subscriber instructions received through the subscriber interface module; and
   - means for sending said messages to the remote entity through the module for communication with the remote entity.

The telephone can also comprise a subscriber security module arranged for interacting, for example, with the module for interpretation of messages received from the remote entity and/or with the module for composition of interaction messages, when said modules have to implement security functions.

The activator message can be sent as a Short Message (SM), for example, of the *Datadownload* type. In this case, the activator message (which can be considered an OTA message) will indicate that it is of the *Datadownload* type, and when the terminal of the telephone receives the message, it can analyze who is the recipient of the information, in other words, the card or the terminal itself. In the case that the recipient is the card, the terminal will send the message thereto by means of an *ENVELOPE* command. The card can be responsible for decrypting the message (if it is encrypted) and carrying out the suitable verifications, verifying the checksum, the sequence number, etc. It can subsequently analyze the TAR (Toolkit Application Reference), which in this case would coincide with the TAR of the application for interaction associated with the invention, it will thereby provide said application for interaction with all the data sent from the remote entity for the interpretation thereof.

Another aspect of the invention corresponds to a system for communication comprising a telephone according to that disclosed above, and a remote entity comprising:
- means for interaction with the telephone; and
- means for sending the activator message to the telephone when receiving a call from said telephone.

The means for interaction can comprise means for sending information to the application for interaction, the application for interaction comprising means for modifying the menu displayed on the display according to said information. The means for interaction can be configured to send information to the application for interaction according to information received from the telephone; for example, if the remote entity receives, for example, a request to carry out an economic operation from the telephone, the remote entity can send to the application for interaction the necessary data and/or commands so that the application for interaction can display on the display the initial menu corresponding to said transaction; as the subscriber sends commands or data (for example, by DTMF dialing, pushing the keys corresponding to the chosen menu options), the remote entity "answers" by sending to the telephone (to the application for interaction) the information necessary for modifying the image displayed on the display, displaying the corresponding menus ("submenus").

Another aspect of the invention corresponds to a method for interaction between a telephone and a remote entity, comprising the steps of:
setting up a telephone call to the remote entity, from the telephone, and exchanging information, comprising data and/or commands, between the telephone and the remote entity;
sending at least one activator message of at least one application for interaction with the remote entity from the remote entity to the telephone once the telephone call is received in the remote entity;
activating said application for interaction with the remote entity as a response to said activator message, and displaying on the display at least one menu for interaction with the remote entity;
exchanging information between the telephone and the remote entity using the menu for interaction.

The information sent to the remote entity from the telephone can be sent through a voice channel by means of Dual Tone Multiple Frequency (DTMF) and/or by means of voice messages, although the possibility also exists of sending the information through a channel that is not a voice channel.

The activator message can be sent in the form of at least one Short Message (SM), for example, formatted as an *SM Datadownload.* In this case, the activator message (which can be considered an OTA message) will indicate that it is of the *Datadownload* type, and when the terminal of the telephone receives the message, it can analyze who is the recipient of the information, in other words, the card or terminal itself. In the case that the recipient is the card, the terminal will send the message thereto by means of an *ENVELOPE* command. The card can be responsible for decrypting the message (if it is encrypted) and carrying out the suitable verifications, verifying the checksum, the sequence number, etc. It can subsequently analyze the TAR (Toolkit Application Reference), which in this case would coincide with the TAR of the application for interaction associated with the invention, it will thereby provide said application for interaction with all the data sent from the remote entity for the interpretation thereof.

The step of sending at least one activator message can comprise the step of loading said application for interaction with the remote entity in the telephone by means of remote access (OTA) to a card of the telephone.

Alternatively, the step of sending at least one activator message can comprise the step of loading said application for interaction with the remote entity in the terminal of the telephone.

Alternatively, the application for interaction with the remote entity can be loaded in the telephone before setting up the telephone call to the remote entity, the step of sending at least one activator message comprising the step of sending the activator message in order to activate said application.

### BRIEF DESCRIPTION OF THE DRAWINGS

A series of drawings will be briefly described below which will help to better understand the invention and which drawings are expressly related to an embodiment of said invention, which embodiment is shown as an illustrative and non-limiting example thereof.

Figure 1 shows a mobile telephone according to a preferred embodiment of the invention.

Figure 2 schematically shows a system according to a preferred embodiment of the invention.

Figure 3 schematically shows the main functional modules of a telephone according to a preferred embodiment of the invention.

### DESCRIPTION OF A PREFERRED EMBODIMENT OF THE INVENTION

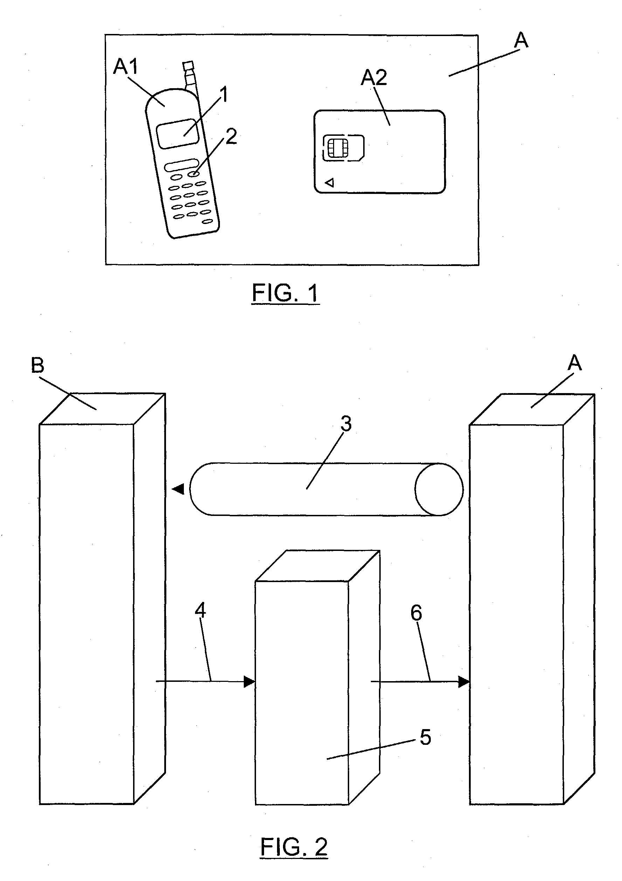

Figure 1 shows a mobile telephone (A) comprising a terminal (A1) with a display (1) and with means (2) (in this case, a keyboard) for introducing data and instructions.

Figure 2 shows a system according to a preferred embodiment of the invention including the telephone (A) and a remote entity (B).

In a first step, the subscriber sets up contact with the remote entity (B) by means of a conventional voice call (3) from his/her telephone (A) to a telephone number of the remote entity. Then, the subscriber waits, in an automatic interactive mode, to receive one or several Short Messages (SM) containing the response provided from the remote entity. Said response includes the activator message of the application for interaction with the remote entity and, according to a possible modality of the invention, it can also include the application for interaction as such, which in this case will be loaded in the telephone (for example, in the card (A1) of the telephone) by means of remote access (OTA) to the card and which is activated once loaded in the card.

The remote entity (B) sends the Short Messages through a remote access interface (4) and an OTA (Over the Air) server (5), from which the activator message (and, if applicable, the application as such) is loaded in the telephone (A) by means of an *SMS Datadownload* operation (6); during the subsequent exchange of information between the telephone (A) and the remote entity (B), the telephone can receive the information from the remote entity through the same channel with *SMS Datadownload* operation (6).

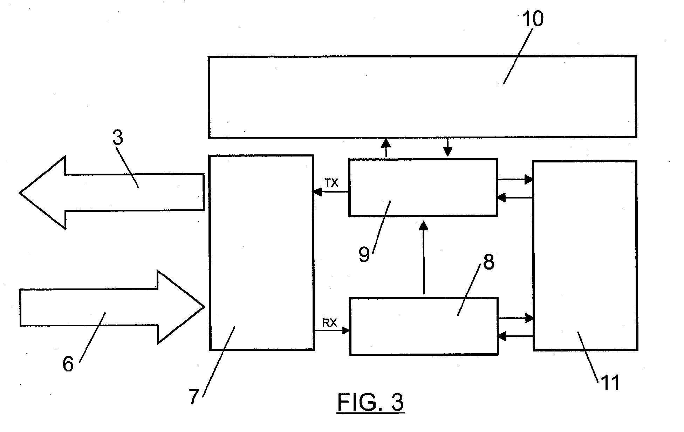

Figure 3 schematically shows a structure including the application for interaction, which could be considered a module for interaction (which could be called "VoiceDTMF Browser") and which can comprise a module for communication with the remote entity (7), a module for interpretation of messages received from the remote entity (8), a module for composition of interaction messages (9), a subscriber interface module (10) and, preferably, also a subscriber security module (11) (although a security module external to the application for interaction can also be used). The application or module for interaction is activated as a response to the reception of the activation message and permits comfortable interaction with the remote entity (B).

Figure 3 shows how the module for communication with the remote entity (7) receives interaction messages (by means of the *SMS Datadownload* operation (6)) from said remote unit in an automatic and transparent manner for the subscriber. After their reception, the interaction messages received proceed to the module for interpretation of messages received from the remote entity (8), where said messages are interpreted.

According to the results of the interpretation, the application for interaction permits displaying on the display (1) of the telephone, through the module for composition of interaction messages (9) and the subscriber interface module (10), a menu for interaction, for example, of the "Option A, Option B...", etc., type. By choosing the desired option, the subscriber will implicitly provide the associated instruction (for example, if Option A is selected, digit X is sent through tones in a transparent manner for the subscriber), and through the subscriber interface module (10) the instruction is received and interpreted in the module for composition of interaction messages (9), where the response is composed, which response is sent to the remote entity through the module for communication with the remote entity (7), in a transparent manner for the subscriber, for example, by means of DTMF dialing through the voice channel (3), although it is also possible to send the response through other means, for example, by means of Short Messages (SM), USSD, WAP, etc., in which case the messages can be sent to a recipient which does not necessarily have to correspond to the same one with which the voice channel (3) was set up.

For the composition of the interaction messages, direct interaction with the subscriber may be necessary through the mobile terminal display (where the subscriber interface module (10) intervenes) or with the security module (11) itself in order to be able to verify security conditions which can optionally be required by the remote entity in order to permit continuing the subscriber interaction.

The application for interaction itself does not have to comprise all of these modules, but rather it can use the corresponding functional modules already existing in telephones. For example, the module for communication with the remote entity (7), the subscriber interface module (10) and the subscriber security module (11) can (at least partially) be part of a conventional mobile telephone and be used by the application for interaction; in return, it may be practical for the application for interaction itself to (substantially) comprise the module for interpretation of messages received from the remote entity (8) and the module for composition of interaction message (9), since an important part of the operations of these two modules (for example, sending to the terminal the instructions necessary for displaying a certain menu on the display) can exclusively correspond to said application.

Throughout the present description and claims, the word "comprise" and variations thereof, such as "comprising", do not intend to exclude other steps or components.

## Claims

1. A telephone (A) comprising:
- a terminal (A1) comprising at least one display (1) and means (2) for introducing data and instructions;
- means for making a telephone call to a remote entity (B);
- means for sending information, comprising data and/or commands, to the remote entity from the telephone;
**characterized in that** it also comprises:
means for receiving from said remote entity and as a response to said telephone call, at least one activator message of, at least, one application for interaction with the remote entity;
means for activating, as a response to said activator message, said application for interaction, said application for interaction comprising means for displaying on the display (1) at least one menu for interaction with the remote entity.

2. A telephone according to claim 1, **characterized in that** the telephone is a mobile telephone comprising a card (A2) (ICC/UICC) where the application for interaction is stored.

3. A telephone according to any of the previous claims, **characterized in that** the telephone is a mobile telephone and **in that** the application for interaction is stored in the terminal (A1) of the telephone.

4. A telephone according to any of the previous claims, **characterized in that** it comprises:
a module for communication with the remote entity (7) comprising means for receiving messages from the remote entity (B) and means for sending messages to the remote entity;
a module for interpretation of messages received from the remote entity (8) through the module for communication with the remote entity (7);
a subscriber interface module (10);
a module for composition of interaction messages (9) comprising:
- means for displaying menus for interaction on the display (1) through the subscriber interface module (10) and according to the interpretation results received from the module for interpretation of messages received from the remote entity (8);
- means for composing messages for the remote entity according to subscriber instructions received through the subscriber interface module (10);
- means for sending said messages to the remote entity through the module for communication with the remote entity (7).

5. A telephone according to claim 4, **characterized in that** it also comprises a subscriber security module (11) arranged for interacting with the module for interpretation of messages received from the remote entity (8) and/or with the module for composition of interaction messages (9) when said modules have to implement security functions.

6. A system for communication **characterized in that** it comprises a telephone according to any of the previous claims and, furthermore, a remote entity (B) comprising:
- means for interaction with the telephone (A);
- means for sending the activator message to the telephone (A) when receiving a call from said telephone (A).

7. A system according to claim 6, **characterized in that** the means for interaction comprise means for sending information to the application for interaction, the application for interaction comprising means for modifying the menu displayed on the display according to said information.

8. A system according to the previous claim, **characterized in that** the means for interaction are configured so as to send information to the application for interaction according to information received from the telephone.

9. A method for interaction between a telephone (A) and a remote entity (B), comprising the steps of:
setting up a telephone call to the remote entity, from the telephone; and
exchanging information, comprising data and/or commands, between the telephone and the remote entity;
**characterized in that** it also comprises the following steps:
sending at least one activator message of at least one application for interaction with the remote entity from the remote entity (B) to the telephone (A) once the telephone call is received in the remote entity;
activating said application for interaction with the remote entity as a response to said activator message, and displaying on the display at least one menu for interaction with the remote entity;
exchanging information between the telephone and remote entity using the menu for interaction.

10. A method according to the previous claim, **characterized in that** the information sent to the remote entity from the telephone is sent through a voice channel by means of Dual Tone Multiple Frequency (DTMF) dialing and/or by means of voice messages.

11. A method according to claim 9, **characterized in that** the information sent to the remote entity from the telephone is sent through a channel which is not a voice channel.

12. A method according to any of claims 9-11, **characterized in that** the activator message is sent in the form of, at least, one Short Message (SM).

13. A method according to any of claims 9-11, **characterized in that** the activator message is sent in the form of, at least, one Short Message (SM) formatted as Datadownload.

14. A method according to any of claims 9-13, **characterized in that** the step of sending at least one activator message comprises the step of loading in the telephone said application for interaction with the remote entity by means of remote access (OTA) to a card of the telephone.

15. A method according to any of claims 9-13, **characterized in that** the step of sending at least one activator message comprises the step of loading said application for interaction with the remote entity in the terminal (A1) of the telephone.

16. A method according to any of claims 9-13, **characterized in that** said at least one application for interaction with the remote entity is already loaded in the telephone before setting up the telephone call to the remote entity, the step of sending at least one activator message comprising the step of sending the activator message for activating said application.
